# EUROPEAN PATENT SPECIFICATION

(11) **EP 4 495 546 B1**
(45) Date of publication and mention of the grant of the patent: **15.04.2026**
(21) Application number: 24787393.8
(22) Date of filing: 10.05.2024
(51) Int. Cl.: E02D 1/02, G01V 1/16

(54) **CABLE-CONNECTED SEPARABLE MARINE GEOLOGICAL ENVIRONMENT INVESTIGATION APPARATUS AND OPERATING METHOD THEREFOR**
KABELVERBUNDENE TRENNBARE GEOLOGISCHE MEERESUMGEBUNGSUNTERSUCHUNGSVORRICHTUNG UND BETRIEBSVERFAHREN DAFÜR
APPAREIL D'ÉTUDE DE MILIEU GÉOLOGIQUE MARIN SÉPARABLE CONNECTÉ PAR CÂBLE ET SON PROCÉDÉ DE FONCTIONNEMENT

(30) Priority: 11.05.2023 CN 202310528375
(43) Date of publication of application: 22.01.2025
(73) Proprietor: Ocean University of China, Qingdao, Shandong 266000 (CN)
(72) Inventor: LIU, Xiaolei, Qingdao, Shandong 266000 (CN); YU, Heyu, Qingdao, Shandong 266000 (CN); ZHANG, Shaopeng, Qingdao, Shandong 266000 (CN); GUO, Lei, Qingdao, Shandong 266000 (CN); LU, Yang, Qingdao, Shandong 266000 (CN); WANG, Xinbao, Qingdao, Shandong 266000 (CN); YU, Jingdong, Qingdao, Shandong 266000 (CN)
(74) Representative: Bayramoglu et al.
(86) International application number: PCT/CN2024/092280
(87) International publication number: WO 2024/230811

(56) References cited:
- WO-A1-2019/078551
- CN-A- 106 707 361
- CN-A- 111 750 920
- CN-A- 112 681 277
- CN-A- 112 681 277
- CN-A- 115 586 586
- CN-A- 116 558 489
- JP-B1- 6 941 907

## Description

### BACKGROUND OF THE INVENTION

### 1. Technical Field

The invention relates to the technical field of seabed monitoring, in particular to tethered separable marine geological environment survey equipment and a working method thereof.

### 2. Description of Related Art

Marine disasters are characterized by a wide variety of types, broad distribution, high frequency, and significant difficulty in prevention. With the rapid development of marine oil and gas resource exploration and marine engineering construction, disasters caused by marine geological factors have been increasingly occurring. According to statistics on offshore drilling equipment accidents in the United States, 40% of offshore platform damage and 50% of subsea pipeline damage incidents are due to seabed instability, while damage caused by offshore storms accounts for only 28%. For the platforms damaged by storms, the underlying causes are mostly related to the instability of seabed sediments, with storms acting merely as an external triggering factor. Therefore, investigating seabed geology and monitoring seabed sediments over extended periods are of great significance for the prevention of marine geological disasters and the protection of marine rights.

The publication WO 2019/078551A1 discloses a submerged infiltration penetration testing apparatus, comprising a frame portion, a rack gear, a worm module unit and a sensor unit. The frame portion includes a top frame, middle frames, and a bottom frame. The top frame and the middle frames may be formed in a square pillar shape. The bottom frame below the middle frames may be formed in a square pillar shape having a larger size than the square pillar shape of the middle frames. The rack gear is formed to have a longitudinal direction in the vertical direction in the frame portion. The worm module unit includes a worm to be meshed with the rack gear. The sensor unit is fixed to the worm module unit. The sensor unit includes a rod and a cone formed at the tip of the rod. The sensor unit continuously measures the penetration resistance force acting on the cone as a physical property of the ground during the penetration into the ground, the friction resistance force on the main surface of the rod, and the pore water pressure generated during penetration can be measured. In the prior art, equipment for marine geological surveys is mainly based on cone penetration test (CPT). This method uses a penetration device to drive a probing rod into the seabed, with the changes in seabed geology indicated by the penetration resistance and side friction measured by sensors located at the tip of the probing rod. However, there is currently no mature equipment in China for long-term monitoring of seabed sediments, resulting in the following deficiencies.
1. Currently, marine geological environment surveys primarily rely on CPT, with no means for long-term monitoring of seabed changes.
2. Existing equipment mainly uses hydraulic and friction wheel penetration methods, resulting in large size and weight.
3. Currently, equipment that employs penetration probing rods for long-term monitoring of seabed changes typically leaves both the probing rods and the equipment body on the seabed. The excessive weight of the equipment during long-term observation may cause issues such as overall settlement, which interferes with measurements.
4. Monitoring sediments requires a prolonged time; generally, self-contained collection methods have limited battery capacity, resulting in short operational duration, and they cannot acquire real-time measurement data, only allowing data retrieval after the observation is completed.

### BRIEF SUMMARY OF THE INVENTION

To address the shortcomings of the prior art, the invention provides tethered separable marine geological environment survey equipment and a working method thereof, facilitating the investigation of seabed geology as well as the long-term monitoring of seabed sediments.

The invention is realized by the following technical scheme. Tethered separable marine geological environment survey equipment comprises an integral frame, wherein the integral frame is divided into an upper part and a lower part, and the lower part of the integral frame is a three-dimensional frame; an upper clamping device, a clamping penetration device, a lower clamping device, a screw rod lifting device, an electric control cabin, a cable guide pulley and an underwater cable winch are installed inside the three-dimensional frame; the upper part of the integral frame is a support tower which is fixedly mounted at a central top position of the three-dimensional frame; a probing rod is arranged inside the support tower, the upper clamping device is positioned above the clamping penetration device, and the lower clamping device is positioned at a bottom of the clamping penetration device;
the probing rod is sequentially composed of a load head, a data acquisition chamber, a pore pressure rod and a CPTU probe from top to bottom, an array of differential pressure transducers are arranged in the pore pressure rod, a data acquisition system and a communication system are arranged in the data acquisition chamber, and a plurality of groups of clamping penetration modules are equidistantly assembled on an outer wall of the pore pressure rod; the underwater cable winch is mounted at a bottom of the interior of the three-dimensional frame, and a cable on the underwater cable winch is connected with the data acquisition chamber at a top of the probing rod through the cable guide pulley;
the clamping penetration device comprises a penetration system pressure plate, penetration component boundary beams, a third bidirectional screw rod, third clamping blocks, a clamping component, a third clamping motor and a third optical axis, and a center of the penetration system pressure plate is provided with a round hole for the probing rod to pass through; the penetration component boundary beams are fixedly mounted at left and right ends of a lower surface of the penetration system pressure plate respectively, the third bidirectional screw rod and the third optical axis are arranged in the two penetration component boundary beams, and left and right ends of the third optical axis and the third bidirectional screw rod are mounted at front and rear ends of the two penetration component boundary beams in parallel through third bearings; the clamping component comprises two symmetrically arranged third clamping block connecting plates, a lower surface of each third clamping block connecting plate is fixedly provided with a clamping column with a semicylindrical groove for clamping the probing rod, and the third clamping blocks are fixedly mounted at front and rear ends of upper surfaces of the two third clamping block connecting plates; the two third clamping blocks at the front end are connected through the third optical axis, and the two third clamping blocks at the rear end are connected through the third bidirectional screw rod via threaded engagement; an output shaft of the third clamping motor is connected to one end of the third bidirectional screw rod;
the screw rod lifting device comprises two transmission screw rods, guide shafts, a transmission shaft, worm gear lifts, couplings, a driving motor chamber, a motor chamber mounting bracket, a reversing transmission shaft and reversing worm gear lifts; the worm gear lifts are connected to bottom ends of the two transmission screw rods via the couplings respectively; the two worm gear lifts are in driving connection with the reversing worm gear lifts through the guide shafts respectively; the two reversing worm gear lifts are in driving connection with each other through the reversing transmission shaft; the two transmission screw rods are connected to left and right sides of the round hole in the penetration system pressure plate through threads in a penetrating manner; the driving motor chamber is in driving connection with one of the worm gear lifts;

As a preferred scheme, the guide shafts run through and are connected to the penetration system pressure plate, and upper and lower ends of the guide shaft are fixedly mounted within the three-dimensional frame.

As a preferred scheme, the upper clamping device comprises two symmetrically arranged first clamping block connecting plates, each first clamping block connecting plate is provided with a semicircular groove for clamping the probing rod, and first clamping blocks are fixedly mounted at front and rear ends of an upper surface of each first clamping block connecting plate; the two first clamping blocks at the front end are connected via a first bidirectional screw rod through threaded engagement in a penetrating manner, and the two first clamping blocks at the rear end are connected via a first optical axis in a penetrating manner; left and right ends of the first bidirectional screw rod and the first optical axis are mounted on first clamping boundary beams through first bearings respectively, a first clamping motor is arranged on an outer side of the first clamping boundary beam at the right end, and an output shaft of the first clamping motor is connected with one end of the first bidirectional screw rod.

As a preferred scheme, the lower clamping device comprises two symmetrically arranged second clamping block connecting plates, each second clamping block connecting plate is provided with a semicircular groove for clamping the probing rod, and second clamping blocks are fixedly mounted at left and right ends of a lower surface of each second clamping block connecting plate; the two second clamping blocks at the left end are connected via a second bidirectional screw rod through threaded engagement in a penetrating manner, and the two second clamping blocks at the right end are connected via a second optical axis in a penetrating manner; and front and rear ends of the second bidirectional screw rod and the second optical axis are mounted on second clamping boundary beams through second bearings respectively, a second clamping motor is arranged on an outer side of the second clamping boundary beam at the front end, and an output shaft of the second clamping motor is connected with one end of the second bidirectional screw rod.

Further, the first clamping motor is supported and fixed by a first motor mounting bracket, the first motor mounting bracket is fixedly mounted on the first clamping boundary beams, the second clamping motor is supported and fixed by a second motor mounting bracket, the second motor mounting bracket is fixedly mounted on the second clamping boundary beams, the third clamping motor is supported and fixed by a third motor mounting bracket, and the third motor mounting bracket is fixedly mounted on the penetration component boundary beams.

As a preferred scheme, the driving motor chamber is supported and fixed by a motor chamber mounting bracket, and the motor chamber mounting bracket is fixedly mounted at the bottom of the interior of the three-dimensional frame.

A working method of tethered separable marine geological environment survey equipment specifically comprises the following steps:
S1, the marine geological environment survey equipment is adjusted on a deck first, and the upper clamping device, the clamping penetration device and the lower clamping device simultaneously clamp the probing rod; a winch on the deck is used to lower the whole equipment and a power supply cable on the deck to the seabed; upon arrival at a designated location and ensuring proper placement, operations begin once the working conditions are satisfied;
S2, the upper clamping device and the lower clamping device release the probing rod, and the probing rod smoothly penetrates into the seabed under the clamping of the clamping penetration device and the movement of the screw rod lifting device; when the clamping penetration device reaches its travel limit, the upper clamping device and the lower clamping device simultaneously clamp the probing rod, the clamping penetration device releases the probing rod, and the screw rod lifting device moves upward to position the clamping penetration device for clamping the probing rod; the upper clamping device and the lower clamping device release the probing rod at the same time, and then the screw rod lifting device moves downward for a single penetration stroke by the clamping penetration device; this clamping and penetration cycle is repeated until the probing rod is completely embedded in the seabed;
S3, when the probing rod starts to penetrate into the seabed, the underwater cable winch simultaneously collects the cable as required; after the probing rod is completely embedded, the clamping penetration device is completely loosened, and the winch on the deck lifts the underwater integral frame off the seabed, while the underwater cable winch releases the cable as the probing rod separates from the integral frame, until the integral frame is fully retrieved onto the deck, thereby enabling tethered power supply and communication of the probing rod.

As a preferred scheme, the operational process of the clamping penetration device clamping the probing rod in S2 is as follows:
when performing clamping during the penetration operation, the clamping motor mounted on the motor mounting bracket moves in an energized state; when the clamping penetration module needs to be clamped, the clamping motor drives the bidirectional screw rod to rotate forward, the clamping component mounted on the clamping block moves toward the center via the bidirectional screw rod and the optical axis, and the clamping component grips the clamping penetration module; at this point, the main forces are a friction between the clamping component and the clamping penetration module, and a pressure exerted by the clamping component on a boss of the clamping penetration module during the penetration operation; after completing the penetration operation, the clamping motor mounted on the motor mounting bracket moves in reverse in an energized state, the clamping motor drives the bidirectional screw rod to rotate in reverse, the clamping component mounted on the clamping block moves outward from the center via the bidirectional screw rod and the optical axis, and the clamping component releases the clamping penetration module until it reaches an appropriate position; at this point, the screw rod lifting device moves to reach a next clamping position for the clamping penetration module until the penetration operation of the probing rod is completed.

Due to the adoption of the above technical scheme, compared with the prior art, the invention has the following beneficial effects.
(1) The technical scheme of the invention integrates marine geological environment investigation and monitoring. It allows for geological surveys using a CPT probe during penetration and enables long-term monitoring of the marine geological environment through pressure sensors in a probing rod after penetration.
(2) An innovative electricity-powered screw-driven penetration method is utilized.
(3) To address the potential interference with measurements from overall settlement that may arise from excessive equipment weight during long-term observation, the probing rod is designed to be separable from an equipment body. After completing the penetration, only the probing rod is left on the seabed, and an underwater cable winch releases a cable during the separation process. The cable then returns to the deck along with the equipment body, and real-time power supply and data communication are performed via the deck, thus enabling prolonged observation and real-time measurement data acquisition.

Additional aspects and advantages of the present invention will become apparent in the following description or be learned by practice of the present invention.

### BRIEF DESCRIPTION OF THE SEVERAL VIEWS OF THE DRAWINGS

The above and/or additional aspects and advantages of the present invention will become apparent and readily understood from the description of embodiments made in conjunction with the following accompanying drawings, in which:
Fig. 1 is a perspective view of the invention;
Fig. 2 is a front view of the invention;
Fig. 3 is a structural diagram of a probing rod;
Fig. 4 is a perspective view of an upper clamping device, a clamping penetration device, a lower clamping device and a screw rod lifting device; and
Fig. 5 is a perspective view of a clamping penetration device.

### DETAILED DESCRIPTION OF THE INVENTION

In order to understand the above objects, features and advantages of the invention more clearly, the invention will be further described in detail with reference to the attached drawings and specific embodiments. It should be noted that the embodiments of the application and the features in the embodiments can be combined with each other without conflict.

In the following description, many specific details are set forth in order to fully understand the invention. However, the invention may be practiced in other ways than those described herein, and therefore, the scope of protection of the invention is not limited by the specific embodiments disclosed below.

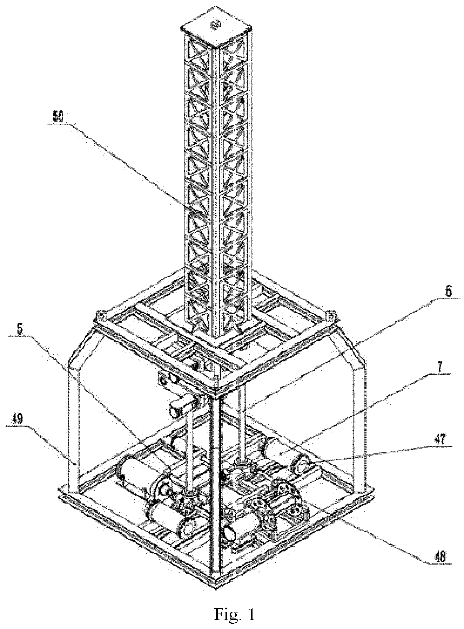

Tethered separable marine geological environment survey equipment and a working method thereof according to the embodiments of the invention will be described in detail below with reference to Figs. 1-5.

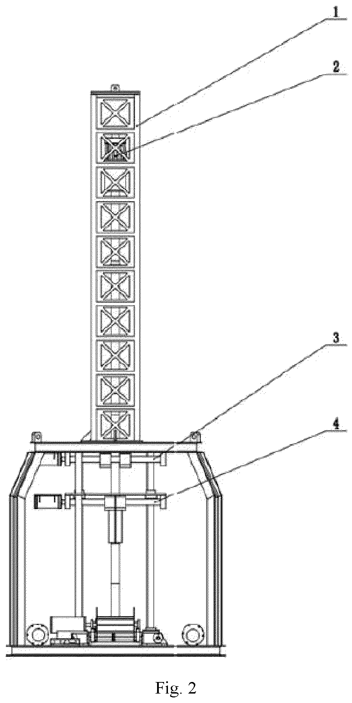

As shown in Figs. 1 and 2, the invention proposes tethered separable marine geological environment survey equipment comprising an integral frame 1. The main role of the integral frame 1 is to protect a probing rod and serve as a carrier, offering protective functions for the entire equipment. The integral frame 1 is divided into an upper part and a lower part, and the lower part of the integral frame 1 is a three-dimensional frame 49; an upper clamping device 3, a clamping penetration device 4, a lower clamping device 5, a screw rod lifting device 6, an electric control cabin 7, a cable guide pulley 47 and an underwater cable winch 48 are installed inside the three-dimensional frame 49; the upper part of the integral frame 1 is a support tower 50 which is fixedly mounted at a central top position of the three-dimensional frame 49; a probing rod 2 is arranged inside the support tower 50, and the probing rod 2, as the core detection device, primarily measures the geological environment parameters of the seabed; the upper clamping device 3 is positioned above the clamping penetration device 4, and the lower clamping device 5 is positioned at a bottom of the clamping penetration device 4; and stable positioning, clamping, and smooth penetration into the seabed of the probing rod 2 are realized through the coordinated operation of the upper clamping device 3, the clamping penetration device 4, the lower clamping device 5, and the screw rod lifting device 6.

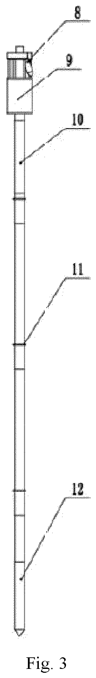

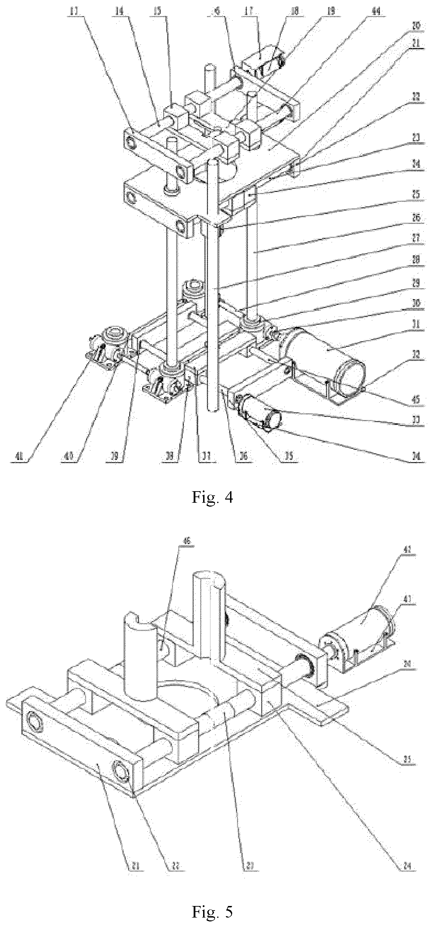

As shown in Fig. 3, the probing rod 2 is sequentially composed of a load head 8, a data acquisition chamber 9, a pore pressure rod 10 and a CPTU probe 12 from top to bottom. The measurements of the survey equipment are conducted using the probing rod equipped with multiple sensors. The CPTU probe 12 at a bottom of the probing rod investigates the seabed geology by measuring the tip resistance, side friction, and pore water pressure during the penetration process. An array of differential pressure transducers are arranged in the pore pressure rod 10, enabling long-term monitoring of seabed sediments through continuous pressure differential measurements. A data acquisition system and a communication system are arranged in the data acquisition chamber 9, enabling the collection of sensor data and external communication. To ensure the safety of long-term monitoring, after the probing rod 2 is driven into the seabed, only the probing rod is left in the seabed while the penetration device is retrieved, achieving separation between the probing rod 2 and the penetration device. The equipment body is equipped with the underwater cable winch 48, which releases a cable as the equipment is lifted during the separation of the probing rod 2 and the equipment body. The cable on the underwater cable winch 48 then returns to the deck with the equipment body, allowing power supply and data communication for the probing rod 2 through the deck. A plurality of groups of clamping penetration modules 11 are equidistantly assembled on an outer wall of the pore pressure rod 10, the underwater cable winch 48 is mounted at a bottom of the interior of the three-dimensional frame 49, and the cable on the underwater cable winch 48 is connected with the data acquisition chamber 9 at a top of the probing rod 2 through the cable guide pulley 47. The key aspect of the tethered separable approach lies in the lifting process of the equipment frame from the seabed to the sea surface during separation and the handling of the cable during penetration. The cable handling is realized by the underwater cable winch 48 which is installed in the integral frame 1 and deployed to the seabed with the equipment. The cable from the data acquisition chamber 9 at the top of the probing rod 2 is stored in the underwater cable winch 48. During the penetration operation of the probing rod 2, the underwater cable winch 48 collects the cable corresponding to the penetration length. Additionally, after the penetration operation is completed, the underwater cable winch 48 is lifted together with the integral frame 1 during the separation of the probing rod 2 and the integral frame 1, releasing the cable and bringing a cable connector to the deck, establishing a connection with the cable through a power supply system and a communication interface on the deck.
As shown in Figs. 4 and 5, the clamping penetration device 4 comprises a penetration system pressure plate 20, penetration component boundary beams 21, a third bidirectional screw rod 23, third clamping blocks 24, a clamping component 25, a third clamping motor 42 and a third optical axis 46, and a center of the penetration system pressure plate 20 is provided with a round hole for the probing rod 2 to pass through; the penetration component boundary beams 21 are fixedly mounted at left and right ends of a lower surface of the penetration system pressure plate 20 respectively, the third bidirectional screw rod 23 and the third optical axis 46 are arranged in the two penetration component boundary beams 21, and left and right ends of the third optical axis 46 and the third bidirectional screw rod 23 are mounted at front and rear ends of the two penetration component boundary beams 21 in parallel through third bearings 22; the clamping component 25 comprises two symmetrically arranged third clamping block connecting plates 51, a lower surface of each third clamping block connecting plate 51 is fixedly provided with a clamping column 52 with a semicylindrical groove for clamping the probing rod 2, and the third clamping blocks 24 are fixedly mounted at front and rear ends of upper surfaces of the two third clamping block connecting plates 51; the two third clamping blocks 24 at the front end are connected through the third optical axis 46 in a penetrating manner, and the two third clamping blocks 24 at the rear end are connected through the third bidirectional screw rod 23 via threaded engagement in a penetrating manner; an output shaft of the third clamping motor 42 is connected to one end of the third bidirectional screw rod 23;
As shown in Fig. 4, the upper clamping device 3 comprises two symmetrically arranged first clamping block connecting plates 19, each first clamping block connecting plate 19 is provided with a semicircular groove for clamping the probing rod 2, and first clamping blocks 15 are fixedly mounted at front and rear ends of an upper surface of each first clamping block connecting plate 19; the two first clamping blocks 15 at the front end are connected via a first bidirectional screw rod 14 through threaded engagement in a penetrating manner, and the two first clamping blocks 15 at the rear end are connected via a first optical axis 44 in a penetrating manner; left and right ends of the first bidirectional screw rod 14 and the first optical axis 44 are mounted on first clamping boundary beams 13 through first bearings 16 respectively, a first clamping motor 18 is arranged on an outer side of the first clamping boundary beam 13 at the right end, and an output shaft of the first clamping motor 18 is connected with one end of the first bidirectional screw rod 14;
As shown in Fig. 4, the lower clamping device 5 comprises two symmetrically arranged second clamping block connecting plates 37, each second clamping block connecting plate 37 is provided with a semicircular groove for clamping the probing rod 2, and second clamping blocks 38 are fixedly mounted at left and right ends of a lower surface of each second clamping block connecting plate 37; the two second clamping blocks 38 at the left end are connected via a second bidirectional screw rod 36 through threaded engagement in a penetrating manner, and the two second clamping blocks 38 at the right end are connected via a second optical axis 45 in a penetrating manner; and front and rear ends of the second bidirectional screw rod 36 and the second optical axis 45 are mounted on second clamping boundary beams 35 through second bearings 39 respectively, a second clamping motor 33 is arranged on an outer side of the second clamping boundary beam 35 at the front end, and an output shaft of the second clamping motor 33 is connected with one end of the second bidirectional screw rod 36.

The first clamping motor 18 is supported and fixed by a first motor mounting bracket 17, the first motor mounting bracket 17 is fixedly mounted on the first clamping boundary beams 13, the second clamping motor 33 is supported and fixed by a second motor mounting bracket 34, the second motor mounting bracket 34 is fixedly mounted on the second clamping boundary beams 35, the third clamping motor 42 is supported and fixed by a third motor mounting bracket 43, and the third motor mounting bracket 43 is fixedly mounted on the penetration component boundary beams 21.

The screw rod lifting device 6 comprises two transmission screw rods 26, guide shafts 27, a transmission shaft 28, worm gear lifts 29, couplings 30, a driving motor chamber 31, a motor chamber mounting bracket 32, a reversing transmission shaft 40 and reversing worm gear lifts 41; the worm gear lifts 29 are connected to bottom ends of the two transmission screw rods 26 via the couplings 30 respectively; the two worm gear lifts 29 are in driving connection with the reversing worm gear lifts 41 through the guide shafts 27 respectively; the two reversing worm gear lifts 41 are in driving connection with each other through the reversing transmission shaft 40; the two transmission screw rods 26 are connected to left and right sides of the round hole in the penetration system pressure plate 20 through threads in a penetrating manner; the driving motor chamber 31 is in driving connection with one of the worm gear lifts 29. The guide shafts 27 run through and are connected to the penetration system pressure plate 20, and upper and lower ends of the guide shaft 27 are fixedly mounted within the three-dimensional frame 49. The driving motor chamber 31 is supported and fixed by a motor chamber mounting bracket 32, and the motor chamber mounting bracket 32 is fixedly mounted at the bottom of the interior of the three-dimensional frame 49.

A working method of tethered separable marine geological environment survey equipment specifically comprises the following steps:
S1, the marine geological environment survey equipment is adjusted on a deck first, and the upper clamping device 3, the clamping penetration device 4 and the lower clamping device 5 simultaneously clamp the probing rod 2; a winch on the deck is used to lower the whole equipment and a power supply cable on the deck to the seabed; upon arrival at a designated location and ensuring proper placement, operations begin once the working conditions are satisfied;
S2, the upper clamping device 3 and the lower clamping device 5 release the probing rod 2, and the probing rod 2 smoothly penetrates into the seabed under the clamping of the clamping penetration device 4 and the movement of the screw rod lifting device 6; when the clamping penetration device 4 reaches its travel limit, the upper clamping device 3 and the lower clamping device 5 simultaneously clamp the probing rod 2, the clamping penetration device 4 releases the probing rod 2, and the screw rod lifting device 6 moves upward to position the clamping penetration device 4 for clamping the probing rod 2; the upper clamping device 3 and the lower clamping device 5 release the probing rod 2 at the same time, and then the screw rod lifting device 6 moves downward for a single penetration stroke by the clamping penetration device 4; this clamping and penetration cycle is repeated until the probing rod 2 is completely embedded in the seabed;
the operational process of the clamping penetration device 4 clamping the probing rod 2 is as follows:
   when performing clamping during the penetration operation, the third clamping motor 42 mounted on the third motor mounting bracket 43 moves in an energized state; when the clamping penetration module 11 needs to be clamped, the third clamping motor 42 drives the third bidirectional screw rod 23 to rotate forward, the clamping component 25 mounted on the third clamping block 24 moves toward the center via the third bidirectional screw rod 23 and the third optical axis 46, and the clamping component 25 grips the clamping penetration module 11; at this point, the main forces are a friction between the clamping component 25 and the clamping penetration module 11, and a pressure exerted by the clamping component 25 on a boss of the clamping penetration module 11 during the penetration operation; after completing the penetration operation, the third clamping motor 42 mounted on the third motor mounting bracket 43 moves in reverse in an energized state, the third clamping motor 42 drives the third bidirectional screw rod 23 to rotate in reverse, the clamping component 25 mounted on the third clamping block 24 moves outward from the center via the third bidirectional screw rod 23 and the third optical axis 46, and the clamping component 25 releases the clamping penetration module 11 until it reaches an appropriate position; at this point, the screw rod lifting device 6 moves to reach a next clamping position for the clamping penetration module 11 until the penetration operation of the probing rod 2 is completed;
   S3, when the probing rod 2 starts to penetrate into the seabed, the underwater cable winch 48 simultaneously collects the cable as required; after the probing rod 2 is completely embedded, the clamping penetration device 4 is completely loosened, and the winch on the deck lifts the underwater integral frame 1 off the seabed, while the underwater cable winch 48 releases the cable as the probing rod 2 separates from the integral frame 1, until the integral frame 1 is fully retrieved onto the deck, thereby enabling tethered power supply and communication of the probing rod 2.

The invention provides a novel penetration mechanism that employs screw rod transmission for the penetration of the probing rod. A probing rod penetration system consists of a worm gear screw drive system, upper and lower clamping components, and a clamping penetration component, enabling guidance, support, positioning, clamping, penetration, and rapid reset clamping of the probing rod. The upper and lower clamping components are used for guiding the probing rod during the penetration process and fixing the probing rod during the reset of the clamping penetration component after a penetration stroke is completed. The clamping penetration component first clamps the probing rod under the driving of the motor, and then inserts the probing rod into the seabed through screw rod transmission.

To avoid the potential interference with measurements from overall settlement that may arise from excessive equipment weight during long-term observation, the equipment adopts a separation scheme for the probing rod and the main frame. After the penetration of the multi-sensor probing rod is completed, the main frame is retrieved, leaving only the multi-sensor probing rod on the seabed for long-term monitoring. During this process, the cable supplies power at the deck unit, and measurement data are transmitted between the deck and the data acquisition chamber. Once the measurements are completed, an acoustic positioning device in the data acquisition chamber is used to locate the probing rod, which is then retrieved by an underwater robot.

In the description of this invention, "multiple" means two or more, unless otherwise specifically defined. Orientation or positional relationships indicated by terms such as "up" and "down" are based on the orientation or positional relationships shown in the accompanying drawings, and are to facilitate the description of the invention and simplify the description only, rather than indicating or implying that the device or element referred to must have a specific orientation or be constructed and operated in a specific orientation, and therefore cannot be construed as limiting the invention. The terms "connect", "mount" and "fix" should be understood in a broad sense. For example, "connect" may refer to fixed connection, detachable connection or integrated connection, and it may be direct connection or indirect connection through intermediate media. For those of ordinary skill in the art, the specific meanings of the above terms in the invention may be understood according to specific situations.

In the description of this specification, terms such as "an embodiment", "some embodiments" and "a specific embodiment" indicate that the specific features, structures, materials, or characteristics described in conjunction with that embodiment or example are included in at least one embodiment or example of the invention. In this specification, the indicative statements regarding the above-mentioned terms do not necessarily refer to the same embodiment or example. Moreover, the specific features, structures, materials, or characteristics described can be combined in a suitable manner in any one or more embodiments or examples.

The above embodiments are only preferred ones of the invention, and are not used to limit the invention.

## Claims

1. Tethered separable marine geological environment survey equipment, comprising an integral frame (1), wherein the integral frame (1) is divided into an upper part and a lower part, and the lower part of the integral frame (1) is a three-dimensional frame (49); an upper clamping device (3), a clamping penetration device (4), a lower clamping device (5), a screw rod lifting device (6), an electric control cabin (7), a cable guide pulley (47) and an underwater cable winch (48) are installed inside the three-dimensional frame (49); the upper part of the integral frame (1) is a support tower (50) which is fixedly mounted at a central top position of the three-dimensional frame (49); a probing rod (2) is arranged inside the support tower (50), the upper clamping device (3) is positioned above the clamping penetration device (4), and the lower clamping device (5) is positioned at a bottom of the clamping penetration device (4);
the probing rod (2) is sequentially composed of a load head (8), a data acquisition chamber (9), a pore pressure rod (10) and a CPTU probe (12) from top to bottom, an array of differential pressure transducers are arranged in the pore pressure rod (10), a data acquisition system and a communication system are arranged in the data acquisition chamber (9), and a plurality of groups of clamping penetration modules (11) are equidistantly assembled on an outer wall of the pore pressure rod (10); the underwater cable winch (48) is mounted at a bottom of the interior of the three-dimensional frame (49), and a cable on the underwater cable winch (48) is connected with the data acquisition chamber (9) at a top of the probing rod (2) through the cable guide pulley (47);
the clamping penetration device (4) comprises a penetration system pressure plate (20), penetration component boundary beams (21), a third bidirectional screw rod (23), third clamping blocks (24), a clamping component (25), a third clamping motor (42) and a third optical axis (46), and a center of the penetration system pressure plate (20) is provided with a round hole for the probing rod (2) to pass through; the penetration component boundary beams (21) are fixedly mounted at left and right ends of a lower surface of the penetration system pressure plate (20) respectively, the third bidirectional screw rod (23) and the third optical axis (46) are arranged in the two penetration component boundary beams (21), and left and right ends of the third optical axis (46) and the third bidirectional screw rod (23) are mounted at front and rear ends of the two penetration component boundary beams (21) in parallel through third bearings (22); the clamping component (25) comprises two symmetrically arranged third clamping block connecting plates (51), a lower surface of each third clamping block connecting plate (51) is fixedly provided with a clamping column (52) with a semicylindrical groove for clamping the probing rod (2), and the third clamping blocks (24) are fixedly mounted at front and rear ends of upper surfaces of the two third clamping block connecting plates (51); the two third clamping blocks (24) at the front end are connected through the third optical axis (46) in a penetrating manner, and the two third clamping blocks (24) at the rear end are connected through the third bidirectional screw rod (23) via threaded engagement in a penetrating manner; an output shaft of the third clamping motor (42) is connected to one end of the third bidirectional screw rod (23);
the screw rod lifting device (6) comprises two transmission screw rods (26), guide shafts (27), a transmission shaft (28), worm gear lifts (29), couplings (30), a driving motor chamber (31), a motor chamber mounting bracket (32), a reversing transmission shaft (40) and reversing worm gear lifts (41); the worm gear lifts (29) are connected to bottom ends of the two transmission screw rods (26) via the couplings (30) respectively; the two worm gear lifts (29) are in driving connection with the reversing worm gear lifts (41) through the guide shafts (27) respectively; the two reversing worm gear lifts (41) are in driving connection with each other through the reversing transmission shaft (40); the two transmission screw rods (26) are connected to left and right sides of the round hole in the penetration system pressure plate (20) through threads in a penetrating manner; the driving motor chamber (31) is in driving connection with one of the worm gear lifts (29); the upper clamping device (3) comprises two symmetrically arranged first clamping block connecting plates (19), each first clamping block connecting plate (19) is provided with a semicircular groove for clamping the probing rod (2), and first clamping blocks (15) are fixedly mounted at front and rear ends of an upper surface of each first clamping block connecting plate (19); the two first clamping blocks (15) at the front end are connected via a first bidirectional screw rod (14) through threaded engagement in a penetrating manner, and the two first clamping blocks (15) at the rear end are connected via a first optical axis (44) in a penetrating manner; left and right ends of the first bidirectional screw rod (14) and the first optical axis (44) are mounted on first clamping boundary beams (13) through first bearings (16) respectively, a first clamping motor (18) is arranged on an outer side of the first clamping boundary beam (13) at the right end, and an output shaft of the first clamping motor (18) is connected with one end of the first bidirectional screw rod (14); the lower clamping device (5) comprises two symmetrically arranged second clamping block connecting plates (37), each second clamping block connecting plate (37) is provided with a semicircular groove for clamping the probing rod (2), and second clamping blocks (38) are fixedly mounted at left and right ends of a lower surface of each second clamping block connecting plate (37); the two second clamping blocks (38) at the left end are connected via a second bidirectional screw rod (36) through threaded engagement in a penetrating manner, and the two second clamping blocks (38) at the right end are connected via a second optical axis (45) in a penetrating manner; and front and rear ends of the second bidirectional screw rod (36) and the second optical axis (45) are mounted on second clamping boundary beams (35) through second bearings (39) respectively, a second clamping motor (33) is arranged on an outer side of the second clamping boundary beam (35) at the front end, and an output shaft of the second clamping motor (33) is connected with one end of the second bidirectional screw rod (36).

2. The tethered separable marine geological environment survey equipment according to Claim 1, wherein the guide shafts (27) run through and are connected to the penetration system pressure plate (20), and upper and lower ends of the guide shaft (27) are fixedly mounted within the three-dimensional frame (49).

3. The tethered separable marine geological environment survey equipment according to Claim 1, wherein the first clamping motor (18) is supported and fixed by a first motor mounting bracket (17), the first motor mounting bracket (17) is fixedly mounted on the first clamping boundary beams (13), the second clamping motor (33) is supported and fixed by a second motor mounting bracket (34), the second motor mounting bracket (34) is fixedly mounted on the second clamping boundary beams (35), the third clamping motor (42) is supported and fixed by a third motor mounting bracket (43), and the third motor mounting bracket (43) is fixedly mounted on the penetration component boundary beams (21).

4. The tethered separable marine geological environment survey equipment according to Claim 1, wherein the driving motor chamber (31) is supported and fixed by a motor chamber mounting bracket (32), and the motor chamber mounting bracket (32) is fixedly mounted at the bottom of the interior of the three-dimensional frame (49).

5. A working method of the tethered separable marine geological environment survey equipment according to Claim 1, comprising the following steps:
S1, the marine geological environment survey equipment is adjusted on a deck first, and the upper clamping device (3), the clamping penetration device (4) and the lower clamping device (5) simultaneously clamp the probing rod (2); a winch on the deck is used to lower the whole equipment and a power supply cable on the deck to the seabed; upon arrival at a designated location and ensuring proper placement, operations begin once the working conditions are satisfied;
S2, the upper clamping device (3) and the lower clamping device (5) release the probing rod (2), and the probing rod (2) smoothly penetrates into the seabed under the clamping of the clamping penetration device (4) and the movement of the screw rod lifting device (6); when the clamping penetration device (4) reaches its travel limit, the upper clamping device (3) and the lower clamping device (5) simultaneously clamp the probing rod (2), the clamping penetration device (4) releases the probing rod (2), and the screw rod lifting device (6) moves upward to position the clamping penetration device (4) for clamping the probing rod (2); the upper clamping device (3) and the lower clamping device (5) release the probing rod (2) at the same time, and then the screw rod lifting device (6) moves downward for a single penetration stroke by the clamping penetration device (4); this clamping and penetration cycle is repeated until the probing rod (2) is completely embedded in the seabed; the operational process of the clamping penetration device (4) clamping the probing rod (2) is as follows:
when performing clamping during the penetration operation, the third clamping motor (42) mounted on the third motor mounting bracket (43) moves in an energized state; when the clamping penetration module (11) needs to be clamped, the third clamping motor (42) drives the third bidirectional screw rod (23) to rotate forward, the clamping component (25) mounted on the third clamping block (24) moves toward the center via the third bidirectional screw rod (23) and the third optical axis (46), and the clamping component (25) grips the clamping penetration module (11); at this point, the main forces are a friction between the clamping component (25) and the clamping penetration module (11), and a pressure exerted by the clamping component (25) on a boss of the clamping penetration module (11) during the penetration operation; after completing the penetration operation, the third clamping motor (42) mounted on the third motor mounting bracket (43) moves in reverse in an energized state, the third clamping motor (42) drives the third bidirectional screw rod (23) to rotate in reverse, the clamping component (25) mounted on the third clamping block (24) moves outward from the center via the third bidirectional screw rod (23) and the third optical axis (46), and the clamping component (25) releases the clamping penetration module (11) until it reaches an appropriate position; at this point, the screw rod lifting device (6) moves to reach a next clamping position for the clamping penetration module (11) until the penetration operation of the probing rod (2) is completed;
S3, when the probing rod (2) starts to penetrate into the seabed, the underwater cable winch (48) simultaneously collects the cable as required; after the probing rod (2) is completely embedded, the clamping penetration device (4) is completely loosened, and the winch on the deck lifts the underwater integral frame (1) off the seabed, while the underwater cable winch (48) releases the cable as the probing rod (2) separates from the integral frame (1), until the integral frame (1) is fully retrieved onto the deck, thereby enabling tethered power supply and communication of the probing rod (2).

## Patentansprüche

1. Angebundene trennbare geologische Meeresumgebungserkundungseinrichtung, umfassend einen einstückigen Rahmen (1), wobei der einstückige Rahmen (1) in einen oberen Teil und einen unteren Teil unterteilt ist und der untere Teil des einstückigen Rahmens (1) ein dreidimensionaler Rahmen (49) ist; wobei eine obere Klemmvorrichtung (3), eine Klemmpenetrationsvorrichtung (4), eine untere Klemmvorrichtung (5), eine Gewindestangenhebevorrichtung (6), eine elektrische Steuerkabine (7), eine Kabelführungsrolle (47) und eine Unterwasserkabelwinde (48) in dem dreidimensionalen Rahmen (49) installiert sind; wobei der obere Teil des einstückigen Rahmens (1) ein Trägermast (50) ist, der fest an einer mittleren oberen Position des dreidimensionalen Rahmens (49) angebracht ist; wobei eine Sondierungsstange (2) im Inneren des Trägermasts (50) angeordnet ist, die obere Klemmvorrichtung (3) über der Klemmpenetrationsvorrichtung (4) angeordnet ist und die untere Klemmvorrichtung (5) an einem Boden der Klemmpenetrationsvorrichtung (4) angeordnet ist;
wobei die Sondierungsstange (2) von oben nach unten nacheinander aus einem Lastkopf (8), einer Datenerfassungskammer (9), einer Porendruckstange (10) und einer CPTU-Sonde (12) aufgebaut ist, wobei eine Array von Druckdifferenzwandlern in der Porendruckstange (10), ein Datenerlangungssystem und ein Kommunikationssystem in der Datenerfassungskammer (9) angeordnet sind und eine Vielzahl von Gruppen von Klemmpenetrationsmodulen (11) in gleichen Abständen an einer Außenwand der Porendruckstange (10) montiert ist; wobei die Unterwasserkabelwinde (48) an einem Boden des Inneren des dreidimensionalen Rahmens (49) angebracht ist und ein Kabel durch die Kabelführungsrolle (47) an der Unterwasserkabelwinde (48) mit der Datenerfassungskammer (9) an einer Oberseite der Sondierungsstange (2) verbunden ist;
wobei die Klemmpenetrationsvorrichtung (4) eine Penetrationssystemdruckplatte (20), Penetrationskomponentenbegrenzungsbalken (21), eine dritte bidirektionale Gewindestange (23), dritte Klemmblöcke (24), eine Klemmkomponente (25), einen dritten Klemmmotor (42) und eine dritte optische Achse (46) umfasst und eine Mitte der Penetrationssystemdruckplatte (20) mit einem Rundloch zum Hindurchführen der Sondierungsstange (2) versehen ist; wobei die Penetrationskomponentenbegrenzungsbalken (21) jeweils am linken und rechten Ende einer unteren Fläche der Penetrationssystemdruckplatte (20) fest angebracht sind, die dritte bidirektionale Gewindestange (23) und die dritte optische Achse (46) in den zwei Penetrationskomponentenbegrenzungsbalken (21) angeordnet sind und linke und rechte Enden der dritten optischen Achse (46) und der dritten bidirektionalen Gewindestange (23) durch dritte Lager (22) parallel an vorderen und hinteren Enden der Penetrationskomponentenbegrenzungsbalken (21) angebracht sind; wobei die Klemmkomponente (25) zwei symmetrisch angeordnete dritte Klemmblockverbindungsplatten (51) umfasst, wobei eine untere Fläche jeder dritten Klemmblockverbindungsplatte (51) fest mit einer Klemmsäule (52) mit einer halbzylindrischen Nut zum Einklemmen der Sondierungsstange (2) versehen ist und die dritten Klemmblöcke (24) fest an vorderen und hinteren Enden der oberen Flächen der zwei dritten Klemmblockverbindungsplatten (51) angebracht sind; wobei die zwei dritten Klemmblöcke (24) am vorderen Ende durch die dritte optische Achse (46) verbunden sind, indem diese durch sie hindurch verläuft, und die zwei dritten Klemmblöcke (24) am hinteren Ende durch die dritte bidirektionale Gewindestange (23) verschraubend verbunden sind, indem diese durch sie hindurch verläuft; wobei eine Abtriebswelle des dritten Klemmmotor (42) mit einem Ende der dritten bidirektionalen Gewindestange (23) verbunden ist;
wobei die Gewindestangenhebevorrichtung (6) zwei Getriebegewindestangen (26), Führungswellen (27), eine Getriebewelle (28), Schneckenradheber (29), Kupplungen (30), eine Antriebsmotorkammer (31), eine Motorkammermontagehalterung (32), eine Umkehrgetriebewelle (40) und Umkehrschneckenradheber (41) umfasst; wobei die Schneckenradheber (29) über die Kupplungen (30) jeweils mit dem unteren Ende der zwei Getriebegewindestangen (26) verbunden sind; wobei die zwei Schneckenradheber (29) durch die Führungswellen (27) jeweils in Antriebsbeziehung mit den Umkehrschneckenradhebern (41) stehen; wobei die zwei Umkehrschneckenradheber (41) durch die Umkehrgetriebewelle (40) in Antriebsbeziehung miteinander stehen; wobei die zwei Getriebegewindestangen (26) verschraubend mit der linken und der rechten Seite des Rundlochs in der Penetrationssystemdruckplatte (20) verbunden sind, indem sie dadurch hindurch verlaufen; wobei der Antriebsmotorkammer (31) antreibend mit einem der Schneckenradheber (29) verbunden ist; wobei die obere Klemmvorrichtung (3) zwei symmetrisch angeordnete erste Klemmblockverbindungsplatten (19) umfasst, wobei jede erste Klemmblockverbindungsplatte (19) mit einer halbkreisförmigen Nut zum Einklemmen der Sondierungsstange (2) versehen ist und erste Klemmblöcke (15) fest am vorderen und am hinteren Ende einer oberen Fläche jeder ersten Klemmblockverbindungsplatte (19) angebracht sind; wobei die zwei ersten Klemmblöcke (15) am vorderen Ende über eine erste bidirektionale Gewindestange (14) verschraubend verbunden sind, indem diese durch sie hindurch verläuft, und die zwei ersten Klemmblöcke (15) am hinteren Ende über eine erste optische Achse (44) verbunden sind, indem diese durch sie hindurch verläuft; wobei linke und rechte Enden der ersten bidirektionalen Gewindestange (14) und der ersten optischen Achse (44) jeweils durch erste Lager (16) an ersten Klemmbegrenzungsbalken (13) angebracht sind, ein erster Klemmmotor (18) an einer Außenseite des ersten Klemmbegrenzungsbalkens (13) am rechten Ende angeordnet ist und eine Abtriebswelle des ersten Klemmmotors (18) mit einem Ende der ersten bidirektionalen Gewindestange (14) verbunden ist; wobei die untere Klemmvorrichtung (5) zwei symmetrisch angeordnete zweite Klemmblockverbindungsplatten (37) umfasst, wobei jede zweite Klemmblockverbindungsplatte (37) mit einer halbkreisförmigen Nut zum Einklemmen der Sondierungsstange (2) versehen ist und zweite Klemmblöcke (38) fest am linken und am rechten Ende einer unteren Fläche jeder zweiten Klemmblockverbindungsplatte (37) angebracht sind; wobei die zwei zweiten Klemmblöcke (38) am linken Ende über eine zweite bidirektionale Gewindestange (36) verschraubend verbunden sind, indem diese durch sie hindurch verläuft, und die zwei zweiten Klemmblöcke (38) am rechten Ende über eine zweite optische Achse (45) verbunden sind, indem diese durch sie hindurch verläuft; und wobei vordere und hintere Enden der zweiten bidirektionalen Gewindestange (36) und der zweiten optischen Achse (45) jeweils durch zweite Lager (39) an zweiten Klemmbegrenzungsbalken (35) angebracht sind, ein zweiter Klemmmotor (33) an einer Außenseite des zweiten Klemmbegrenzungsbalkens (35) am vorderen Ende angeordnet ist und eine Abtriebswelle des zweiten Klemmmotors (33) mit einem Ende der zweiten bidirektionalen Gewindestange (36) verbunden ist.

2. Angebundene trennbare geologische Meeresumgebungserkundungseinrichtung nach Anspruch 1, wobei die Führungswellen (27) durch die Penetrationssystemdruckplatte (20) verlaufen und damit verbunden sind und ein oberes und ein unteres Ende der Führungswellen (27) fest in dem dreidimensionalen Rahmen (49) angebracht sind.

3. Angebundene trennbare geologische Meeresumgebungserkundungseinrichtung nach Anspruch 1, wobei der erste Klemmmotor (18) durch eine erste Motormontagehalterung (17) getragen und fixiert wird, die erste Motormontagehalterung (17) fest an dem ersten Klemmbegrenzungsbalken (13) angebracht ist, der zweite Klemmmotor (33) durch eine zweite Motormontagehalterung (34) getragen und fixiert wird, die zweite Motormontagehalterung (34) fest an dem zweiten Klemmbegrenzungsbalken (35) angebracht ist, der dritte Klemmmotor (42) durch eine dritte Motormontagehalterung (43) getragen und fixiert wird und die dritte Motormontagehalterung (43) fest an den Penetrationskomponentenbegrenzungsbalken (21) angebracht ist.

4. Angebundene trennbare geologische Meeresumgebungserkundungseinrichtung nach Anspruch 1, wobei die Antriebsmotorkammer (31) durch eine Motorkammermontagehalterung (32) getragen und fixiert wird und die Motorkammermontagehalterung (32) fest am Boden im Inneren des dreidimensionalen Rahmens (49) angebracht ist.

5. Verfahren zum Betreiben der angebundenen trennbaren geologischen Meeresumgebungserkundungseinrichtung nach Anspruch 1, folgende Schritte umfassend:
S1: die geologische Meeresumgebungserkundungseinrichtung wird zunächst auf einem Deck angepasst und die obere Klemmvorrichtung (3), die Klemmpenetrationsvorrichtung (4) und die untere Klemmvorrichtung (5) klemmen gleichzeitig die Sondierungsstange (2) ein; eine Winde an Deck wird zum Absenken der gesamten Einrichtung und eines Stromversorgungskabels an Deck auf den Meeresboden verwendet; bei Ankunft an einer vorgegebenen Stelle und Sicherstellung der korrekten Anordnung wird der Betrieb gestartet, sobald die Einsatzbedingungen erfüllt sind;
S2: die obere Klemmvorrichtung (3) und die untere Klemmvorrichtung (5) geben die Sondierungsstange (2) frei und die Sondierungsstange (2) dringt durch das Einklemmen mittels der durch die Klemmpenetrationsvorrichtung (4) und die Bewegung der Gewindestangenhebevorrichtung (6) ungehindert in den Meeresboden ein; wenn die Klemmpenetrationsvorrichtung (4) das Ende ihres Verfahrwegs erreicht hat, klemmen die obere Klemmvorrichtung (3) und die untere Klemmvorrichtung (5) gleichzeitig die Sondierungsstange (2) ein, die Klemmpenetrationsvorrichtung (4) gibt die Sondierungsstange (2) und die Gewindestangenhebevorrichtung (6) bewegt sich aufwärts, um die Klemmpenetrationsvorrichtung (4) zum Einklemmen der Sondierungsstange (2) zu positionieren; die obere Klemmvorrichtung (3) und die untere Klemmvorrichtung (5) geben zum gleichen Zeitpunkt die Sondierungsstange (2) frei, woraufhin sich die Gewindestangenhebevorrichtung (6) für einen einzelnen Penetrationshub durch die Klemmpenetrationsvorrichtung (4) abwärts bewegt; dieser Klemm- und Penetrationszyklus wird wiederholt, bis die Sondierungsstange (2) vollständig im Meeresboden eingebettet ist; wobei der Betriebsvorgang des Einklemmens der Sondierungsstange (2) durch die Klemmpenetrationsvorrichtung (4) wie folgt ist:
beim Durchführen des Einklemmens während des Penetrationsbetriebs bewegt sich der an der dritten Motormontagehalterung (43) angebrachte dritte Klemmmotor (42) im Erregungszustand; wenn das Klemmpenetrationsmodul (11) eingeklemmt werden muss, treibt der dritte Klemmmotor (42) die bidirektionale Gewindestange (23) an, sodass sie sich vorwärts dreht, die am dritten Klemmblock (24) angebrachte Klemmkomponente (25) bewegt sich über die dritte bidirektionale Gewindestange (23) und die dritte optische Achse (46) in die Mitte, und die Klemmkomponente (25) ergreift das Klemmpenetrationsmodul (11); dabei sind die Hauptkräfte eine Reibung zwischen der Klemmkomponente (25) und dem Klemmpenetrationsmodul (11) und ein während des Penetrationsbetriebs durch die Klemmkomponente (25) auf einen Ansatz des Klemmpenetrationsmodul (11) ausgeübter Druck; nach dem Abschluss des Penetrationsbetriebs bewegt sich der an der dritten Motormontagehalterung (43) angebrachte dritte Klemmmotor (42) im Erregungszustand in umgekehrter Richtung, der dritte Klemmmotor (42) treibt die dritte bidirektionale Gewindestange (23) an, sodass sie sich rückwärts dreht, die am dritten Klemmblock (24) angebrachte Klemmkomponente (25) bewegt sich über die dritte bidirektionale Gewindestange (23) und die dritte optische Achse (46) und die Klemmkomponente (25) gibt das Klemmpenetrationsmodul (11) frei, bis dieses eine geeignete Position erreicht; nun bewegt sich die Gewindestangenhebevorrichtung (6), um eine nächste Klemmposition für das Klemmpenetrationsmodul (11) zu erreichen, bis der Penetrationsbetrieb der Sondierungsstange (2) abgeschlossen wurde;
S3: wenn die Sondierungsstange (2) beginnt, in den Meeresboden einzudringen, wickelt die Unterwasserkabelwinde (48) zugleich das Kabel wie erforderlich auf; wenn die Sondierungsstange (2) vollständig eingebettet wurde, wird die Klemmpenetrationsvorrichtung (4) vollständig gelöst und die Winde an Deck hebt den einstückigen Rahmen (1) unter Wasser vom Meeresboden, während zugleich die Unterwasserkabelwinde (48) das Kabel freigibt, während sich die Sondierungsstange (2) von dem einstückige Rahmen (1) trennt, bis der einstückige Rahmen (1) vollständig auf das Deck zurückgebracht wurde, wodurch eine angebundene Stromversorgung und Kommunikation mit der Sondierungsstange (2) ermöglicht wird.

## Revendications

1. Équipement de relevé de l'environnement géologique marin séparable et connecté, comprenant un cadre intégral (1), dans lequel le cadre intégral (1) est divisé en une partie supérieure et une partie inférieure, et la partie inférieure du cadre intégral (1) est un cadre tridimensionnel (49) ; un dispositif de fixation supérieur (3), un dispositif de pénétration de fixation (4), un dispositif de fixation inférieur (5), un dispositif de levage à tige de vis (6), une cabine de commande électrique (7), une poulie guide de câble (47) et un treuil de câbles sous-marins (48) sont installés à l'intérieur du cadre tridimensionnel (49) ; la partie supérieure du cadre intégral (1) est une tour de support (50) qui est montée fixement en position centrale supérieure du cadre tridimensionnel (49) ; une tige de sondage (2) est disposée à l'intérieur de la tour de support (50), le dispositif de fixation supérieur (3) est positionné au-dessus du dispositif de pénétration de fixation (4), et le dispositif de fixation inférieur (5) est positionné au bas du dispositif de pénétration de fixation (4) ;
la tige de sondage (2) est composée séquentiellement d'une tête de charge (8), d'une chambre d'acquisition de données (9), d'une tige de pression interstitielle (10) et d'une sonde CPTU (12) de haut en bas, un réseau de transducteurs de pression différentielle est disposé dans la tige de pression interstitielle (10), un système d'acquisition de données et un système de communication sont disposés dans la chambre d'acquisition de données (9), et une pluralité de groupes de modules de pénétration de fixation (11) sont assemblés à égale distance sur une paroi extérieure de la tige de pression interstitielle (10) ; le treuil de câbles sous-marins (48) est monté au bas de l'intérieur du cadre tridimensionnel (49), et un câble sur le treuil de câbles sous-marins (48) est relié à la chambre d'acquisition de données (9) au sommet de la tige de sondage (2) via la poulie guide de câble (47) ;
le dispositif de pénétration de fixation (4) comprend une plaque de pression du système de pénétration (20), des poutres de limite du composant de pénétration (21), une troisième tige de vis bidirectionnelle (23), des troisièmes blocs de fixation (24), un composant de fixation (25), un troisième moteur de fixation (42) et un troisième axe optique (46), et un centre de la plaque de pression du système de pénétration (20) est doté d'un trou rond pour que la tige de sondage (2) puisse traverser ; les poutres de limite du composant de pénétration (21) sont montées fixement aux extrémités gauche et droite d'une surface inférieure de la plaque de pression du système de pénétration (20) respectivement, la troisième tige de vis bidirectionnelle (23) et le troisième axe optique (46) sont disposés dans les deux poutres de limite du composant de pénétration (21), et les extrémités gauche et droite du troisième axe optique (46) et de la troisième tige de vis bidirectionnelle (23) sont montées aux extrémités avant et arrière des deux poutres de limite du composant de pénétration (21) en parallèle via des troisièmes paliers (22) ; le composant de fixation (25) comprend deux plaques de connexion du troisième bloc de fixation (51) disposées symétriquement, une surface inférieure de chaque troisième bloc de fixation (51) est équipée fixement d'une colonne de fixation (52) avec une rainure semi-cylindrique pour serrer la tige de sondage (2), et des troisièmes blocs de fixation (24) sont montés fixement aux extrémités avant et arrière des surfaces supérieures des deux plaques de liaison du troisième bloc de fixation (51) ; les deux troisièmes blocs de fixation (24) à l'avant sont reliés via le troisième axe optique (46) de manière pénétrante, et les deux troisièmes blocs de fixation (24) à l'arrière sont reliés par la troisième tige à vis bidirectionnelle (23) par un engagement fileté de manière pénétrante ; un arbre de sortie du troisième moteur de fixation (42) est relié à une extrémité de la troisième tige à vis bidirectionnelle (23) ;
le dispositif de levage à tige de vis (6) comprend deux tiges à vis de transmission (26), des arbres de guidage (27), un arbre de transmission (28), des leviers à engrenages sans fin (29), des accouplements (30), une chambre du moteur d'entraînement (31), un support de montage pour chambre du moteur (32), un arbre de transmission de recul (40) et des leviers à engrenages sans fin d'inversion (41) ; les leviers à vis sans fin (29) sont reliés aux extrémités inférieures des deux tiges à vis de transmission (26) via les accouplements (30) respectivement ;
Les deux levages à vis sans fin (29) sont en connexion d'entraînement avec les leviers à vis sans fin (41) d'inversion à travers les arbres de guidage (27) respectivement ; les deux élévateurs à vis sans fin (41) sont en connexion d'entraînement via l'arbre de transmission de recul (40) ; les deux tiges à vis de transmission (26) sont reliées aux côtés gauche et droit du trou rond dans la plaque de pression du système de pénétration (20) à travers des filetages de manière pénétrante ; la chambre du moteur d'entraînement (31) est en connexion d'entraînement avec l'un des supports à vis sans fin (29) ; le dispositif de fixation supérieur (3) se compose de deux plaques de connexion du premier bloc de fixation (19), chaque plaque de connexion du premier bloc de fixation (19) étant munie d'une rainure semi-circulaire pour serrer la tige de sondage (2), et les premiers blocs de fixation (15) sont fixement montés aux extrémités avant et arrière d'une surface supérieure de chaque plaque de connexion du premier bloc de fixation (19) ; les deux premiers blocs de fixation (15) à l'avant sont reliés par une première tige de vis bidirectionnelle (14) à travers un engagement fileté de manière pénétrante, et les deux premiers blocs de fixation (15) à l'arrière sont connectés via un premier axe optique (44) de manière pénétrante ; les extrémités gauche et droite de la première tige de vis bidirectionnelle (14) et du premier axe optique (44) sont montées respectivement sur les premières poutres de limite de fixation (13) jusqu'aux premiers paliers (16), un premier moteur de fixation (18) est disposé sur un côté extérieur de la première poutre de fixation (13) à l'extrémité droite, et un arbre de sortie du premier moteur de fixation (18) est relié à une extrémité de la première tige de vis bidirectionnelle (14) ; le dispositif de fixation inférieur (5) comprend deux plaques de connexion du deuxième bloc de fixation (37) disposées symétriquement, chaque plaque de connexion du deuxième bloc de fixation (37) est munie d'une rainure semi-circulaire pour serrer la tige de sondage (2), et les deuxièmes blocs de fixation (38) sont fixement montés aux extrémités gauche et droite d'une surface inférieure de chaque plaque de connexion du deuxième bloc de fixation (37) ; les deux deuxièmes blocs de fixation (38) à l'extrémité gauche sont reliés via une deuxième tige de vis bidirectionnelle (36) à travers un engagement fileté de manière pénétrante et les deux deuxièmes blocs de fixation (38) à l'extrémité droite sont connectés via un deuxième axe optique (45) de manière pénétrante ; et les extrémités avant et arrière de la deuxième tige de vis bidirectionnelle (36) et du deuxième axe optique (45) sont montées sur les deuxièmes poutres de limite de fixation (35) via des deuxièmes paliers (39), respectivement, un deuxième moteur de fixation (33) est disposé sur un côté extérieur de la deuxième poutre de fixation (35) à l'avant, et un arbre de sortie du deuxième moteur de fixation (33) est relié à une extrémité de la deuxième tige de vis bidirectionnelle (36).

2. L'équipement de relevé de l'environnement géologique marin séparable connecté selon la revendication 1, dans lequel les arbres de guidage (27) traversent et sont connectés à la plaque de pression du système de pénétration (20), et les extrémités supérieure et inférieure de l'arbre de guidage (27) sont montées fixement à l'intérieur du cadre tridimensionnel (49).

3. L'équipement de relevé de l'environnement géologique marin séparable connecté selon la revendication 1, dans lequel le premier moteur de fixation (18) est soutenu et fixé par un support de montage du premier moteur (17), le support de montage du premier moteur (17) est raccordé fixement sur les premières poutres de limite de fixation (13), le deuxième moteur de fixation (33) est soutenu et fixé par un deuxième support de montage du moteur (34), le deuxième support de montage du moteur (34) est raccordé fixement sur la deuxième poutre de limite de fixation (35), le troisième moteur de fixation (42) est soutenu et fixé par un troisième support de montage du moteur (43), et le troisième support de montage du moteur (43) est fixement monté sur les poutres de limite du composant de pénétration (21).

4. L'équipement de relevé de l'environnement géologique marin séparable connecté selon la revendication 1, dans lequel la chambre du moteur d'entraînement (31) est soutenue et fixée par un support de montage dans la chambre du moteur (32), et le support de montage dans la chambre du moteur (32) est raccordé fixement au bas de l'intérieur du cadre tridimensionnel (49).

5. Procédé opérationnel de l'équipement de relevé de l'environnement géologique marin séparable connecté selon la revendication 1, comprenant les étapes suivantes :
S1, l'équipement de relevé de l'environnement géologique marin est d'abord ajusté sur un pont, et le dispositif de fixation supérieur (3), le dispositif de pénétration de fixation (4) et le dispositif de fixation inférieur (5) fixent simultanément la tige de sondage (2) ; un treuil sur le pont est utilisé pour descendre l'ensemble de l'équipement et un câble d'alimentation électrique sur le pont jusqu'au fond marin ; à l'arrivée à un emplacement désigné et en assurant un placement approprié, les opérations commencent une fois les conditions d'exploitation satisfaites ;
S2, le dispositif de fixation supérieur (3) et le dispositif de fixation inférieur (5) libèrent la tige de sondage (2), et la tige de sondage (2) pénètre en douceur dans le fond marin grâce à la fixation du dispositif de pénétration de fixation (4) et le mouvement du dispositif de levage de la tige de vis (6) ; lorsque le dispositif de pénétration de fixation (4) atteint sa limite de course, le dispositif de fixation supérieur (3) et le dispositif de fixation inférieur (5) serrent simultanément la tige de sondage (2), le dispositif de pénétration de fixation (4) libère la tige de sondage (2), et le dispositif de levage de la tige de vis (6) se déplace vers le haut pour positionner le dispositif de pénétration de fixation (4) afin de serrer la tige de sondage (2) ; le dispositif de fixation supérieur (3) et le dispositif de fixation inférieur (5) libèrent simultanément la tige de sondage (2), puis le dispositif de levage de la tige de vis (6) descend pour un seul coup de pénétration par le dispositif de pénétration de fixation (4) ; ce cycle de fixation et de pénétration est répété jusqu'à ce que la tige de sondage (2) soit complètement enfoncée dans le fond marin ; le processus opérationnel du dispositif de pénétration de fixation (4) serrant la tige de sondage (2) est le suivant :
lors de la fixation pendant l'opération de pénétration, le troisième moteur de fixation (42) monté sur le troisième support de montage du moteur (43) se déplace en état d'alimentation ; lorsque le module de pénétration de fixation (11) doit être fixé, le troisième moteur de fixation (42) entraîne la troisième tige à vis bidirectionnelle (23) en rotation vers l'avant, le composant de fixation (25) monté sur le troisième bloc de fixation (24) se déplace vers le centre via la troisième tige de vis bidirectionnelle (23) et le troisième axe optique (46), et le composant de fixation (25) saisit le module de pénétration de fixation (11) ; à ce stade, les forces principales sont une friction entre le composant de fixation (25) et le module de pénétration de fixation (11), et une pression exercée par le composant de fixation (25) sur une protubérance du module de pénétration de fixation (11) pendant l'opération de pénétration ; après avoir terminé l'opération de pénétration, le troisième moteur de fixation (42) monté sur le support de montage du troisième moteur (43) se déplace en marche arrière en état d'alimentation, le troisième moteur de fixation (42) entraîne la troisième tige de vis bidirectionnelle (23) en rotation arrière, le composant de fixation (25) monté sur le troisième bloc de fixation (24) se déplace vers l'extérieur depuis le centre via la troisième tige de vis bidirectionnelle (23) et le troisième axe optique (46), et le composant de fixation (25) libère le module de pénétration de fixation (11) jusqu'à ce qu'il atteigne une position appropriée ; à ce stade, le dispositif de levage de la tige de vis (6) se déplace pour atteindre la position de fixation suivante du module de passage de fixation (11) jusqu'à ce que l'opération de pénétration de la tige de sondage (2) soit terminée ;
S3, lorsque la tige de sondage (2) commence à pénétrer dans le fond marin, le treuil de câbles sous-marins (48) récupère simultanément le câble selon les besoins ; une fois que la tige de sondage (2) est complètement enfoncée, le dispositif de pénétration de fixation (4) est complètement desserré, et le treuil sur le pont soulève le cadre intégral (1) sous-marin du fond marin, tandis que le treuil de câble sous-marin (48) libère le câble lorsque la tige de sondage (2) se sépare du cadre intégral (1), jusqu'à ce que le cadre intégral (1) soit complètement récupéré sur le pont, permettant ainsi l'alimentation électrique connectée et la communication de la tige de sondage (2).
